# EUROPEAN PATENT SPECIFICATION

(11) **EP 0 407 550 B1**
(45) Date of publication and mention of the grant of the patent: **19.10.1994**
(21) Application number: 90902355.8
(22) Date of filing: 15.01.1990
(51) Int. Cl.: G07D 7/00, G06K 7/016

(54) **CODING SECURITY THREADS FOR BANK NOTES AND SECURITY PAPERS**
KODIERUNG EINES SICHERHEITSFADENS FÜR BANKNOTEN UND SICHERHEITSPAPIERE
FILS DE SECURITE AVEC CODE POUR BILLETS DE BANQUE ET AUTRES PAPIERS FIDUCIAIRES

(30) Priority: 20.01.1989 GB 8901242
(43) Date of publication of application: 16.01.1991
(73) Proprietor: THE GOVERNOR AND COMPANY OF THE BANK OF ENGLAND, London EC2R 8AH (GB)
(72) Inventor: JONES, Philip Brian Brant, Chelmsford,Essex CM1 4RD (GB)
(74) Representative: Horton, Andrew Robert Grant
(86) International application number: GB9000057
(87) International publication number: WO9008367

(56) References cited:
- DE-A- 3 225 485
- GB-A- 1 357 489
- GB-A- 1 411 477
- GB-A- 2 097 164
- GB-A- 2 140 948
- US-A- 4 024 379

## Description

This invention relates to coding security threads for bank notes and other security documents.

It is well known to provide a security thread in a bank note or security paper. The thread, which may be of thread form but is usually in the form of an elongate strip, is usually though not necessarily in the form of an elongated carrier such as a plastics film which supports a metallic member in the form of a continuous or discontinuous strip. It is known to use magnetic material for the strip and it is also known to provide a repetitive coding on the strip. The coding may comprise a binary code of a particular word length. It is preferable to define a bit length, that is to say the length occupied by each bit in the binary code, and to render the bit length substantially constant for the whole length of the strip. The word segments may alternate with termination segments.

Although the coding of security threads, in the particular case of a magnetic thread, has been known for a long time from, for example GB-1127043, it has proved particularly difficult to provide a security thread which can be reliably detected by a reading machine. It has also proved difficult to provide threads which can yield a sufficient number of codes to enable unique identification of a particular denomination of note or type of note within a given format.

A security thread, usually with its carrier, would normally be manufactured in great lengths so as to be incorporated into paper in a continuous paper making process. The thread may be made from a web and thereafter be slit into narrow strips at least one of which is incorporated at a given place in a continuous roll of security paper so that eventually it extends across the shorter dimension of each of a multiplicity of bank notes printed on the web. It is not usually possible or even desirable to achieve exact register of each bank note with the longitudinal coding on the magnetic thread.

The present invention is particularly concerned with providing an improved format for security threads which are used or intended to be used in bank notes or other similar forms of security document. The main object of the invention is to provide a format which is extremely resistant to false readings and versatile in its variety of codes.

The precharacterising parts of the independent claims correspond to GB-A-1127043 previously mentioned.

Also illustrative of the state of the art is DE-A-3225485 which discloses a security document having a bar code according to 'Electronic Design', 15 October 1981, pages 207 to 216.

In one aspect the invention provides a security thread for bank notes or security paper, comprising a magnetic track which has a machine-readable binary code, the said code being constituted by termination segments and word segments which alternate, characterised in that each word segment consists of a plurality of substantially equal bit lengths, the first and last bit lengths in each word segment being of a first binary value, and each termination segment being longer in length than a maximum sequence of bit lengths of a second binary value within a word segment and comprising a multiplicity of bit lengths of said second binary value.

Owing to the relationship between the length of the termination segment and the said maximum sequence of bit lengths in the word segment, the reading of a plurality of bits taken partly from one word and partly from another is prevented. This restriction reduces the total number of different codes which can be provided by a bit sequence consisting of the second plurality of bits but different codes may be provided by varying a multiplicity of parameters while still retaining the same general format. For example, the bit length of the word can be varied, the format being sufficient to avoid any confusion of a word of n bits with a word of other than n bits. The termination length may be varied. The restriction on the bit sequence length may be varied and of course the individual bit lengths may be varied.

The track may be discontinuous and the said second binary value may be denoted by an absence of magnetic material.

The termination segments need not be an integral number of bit lengths, and according to another aspect of the invention there is provided a bank note or other security document having running across it within its thickness a security thread which has a magnetic track constituting a machine-readable binary code, the said track being composed of termination segments and word segments which alternate, characterised in that each word segment consists of a predetermined plurality of bit lengths, the first and last bit lengths in each word segment being of a first binary value, each termination segment being longer in length than a maximum sequence of bit lengths of a second binary value within a word segment and comprising a multiplicity of bit lengths of said second binary value, and there being at least one complete word segment and two complete termination segments across the bank note or security document.

### BRIEF DESCRIPTION OF THE DRAWINGS

Figure 1 illustrates diagramatically one form of magnetic security thread according to the inventions.

Figure 2 illustrates a magnetic thread having the same format as the thread shown in Figure 1 but with a different coding.

### DETAILED DESCRIPTION

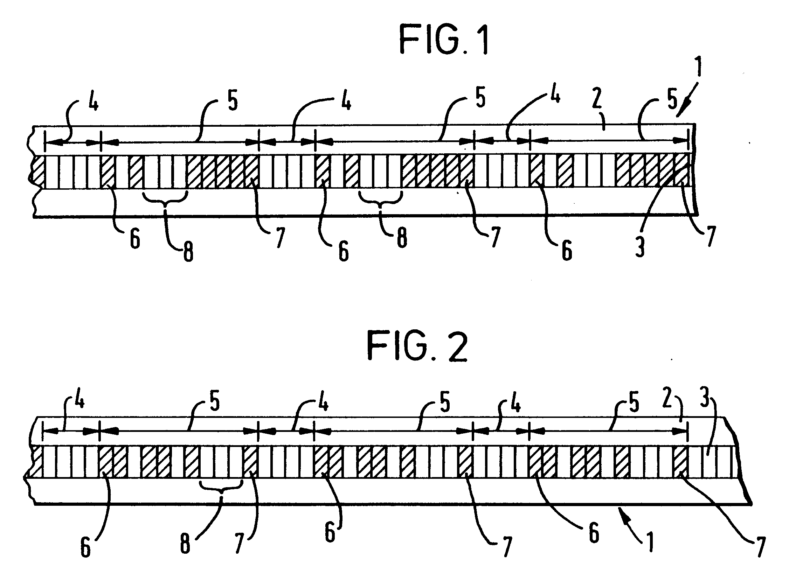

The security device shown in Figure 1 consists of a security thread 1 which may comprise, in this embodiment a carrier such as a plastic strip 2 which may be made of 'Melinex' or other suitable polyester. The surface of the strip 2 may be coated with a vacuum deposition of, for example, aluminium. Along the thread 1 is a discontinuous track 3 of magnetic material. For convenience of understanding, the track 3 is shown as divided into equally spaced bit lengths, those which are cross hatched denoting which bit lengths are constituted by material, and those bit lengths which are blank showing where material is omitted. This embodiment of a thread is preferred, but it is not the only form available. Other forms of coding using a continuous or discontinuous thread are intended to be within the scope of the invention.

The bit lengths or bit cells of the thread are of substantially equal length. Typically, each bit length may be 2 mm long. Of course, this is a parameter which can be varied without altering the same general format.

The magnetic thread or track is coded so that alternate segments 4 and 5 succeed each other along the length of thread. The segments 4 are termination segments which separate and define the beginning and end of two successive word segments. Each word segment 5 in a given magnetic thread has the same length. In the example shown the word length is eleven bits. Employing the convention that the presence of magnetic material in a bit length is to be denoted by a 1, and absence by a 0, the particular coding for each word length 5 in the embodiment in Figure 1 is 10100011111.

Each termination segment consists effectively of a plurality of bit lengths; that is to say, it occupies a length equal to an integral multiple of bit lengths. Each of the bit lengths in the termination segment contains no magnetic material, and is therefore a 0.

A first bit length 6 and a last bit length 7 in the word segment should be of the opposite binary value to those of the termination segment. Thus, in this embodiment, the first and last bit lengths of the word segment should be 1's.

The format herein employed has one further restriction, namely a restriction on a continuous sequence 8 of 0's within each word, that is to say a sequence of binary digits which have the same effective binary value as the (imaginary) bits in the termination segment. This restriction is employed in order to prevent the occurrence within a word of any sequence which might be confused with a termination segment.

In the example therefor the length of each termination segment 4 is four bit lengths, i.e. four 0's, and accordingly the maximum sequence of 0's in the word segments must be less than four.

Figure 2 illustrates diagramatically another security strip which has the same format and parameters as the strip shown in Figure 1 but with a different coding, the coding within each word segment being 11011010001. This strip likewise has a maximum sequence of bits of coding corresponding to bits in the termination segment of one fewer than the bit length of the temination segment.

In the foregoing, all the words within a particular strip have the same length and coding. This is preferred but the repetition cycle could be greater than that shown.

The use of an 11 bit word with a 4 bit termination segment and a 3 bit restriction on the length of a sequence of 0's within each word is not, of course essential. One of the advantages of the invention is that the same general format can be used while the parameters of word length and so on can be varied. A greater restriction on the number of codes available is provided by varying the 0 sequence maximum length so that it is more than one bit length fewer than the length of the termination segment. This is more appropriate for codings where the word length and termination length are substantially greater than as shown in the drawing.

Although the restriction on the maximum sequence of 0's within a word segment substantially reduces the different codes available, a great variety of different codes may be provided by varying the word length, the termination length and the bit length.

The tolerances adopted for the bit length are generally of the order of 15% of a bit length for any sequence of bits. Thus a 2 mm length may have a tolerance between 1.7 mm and 2.3 mm but a three bit length, corresponding to 6 mm, may have a tolerance of 5.7 mm to 6.3 mm. In this case the absolute tolerances are the same regardless of the length of the respective bit sequence.

The use of such a constant absolute tolerance rather than a fractional tolerance facilitates the provision of different codes which employ the same general format but employ a different bit length.

In the foregoing, the termination segment has a length equal to a plurality of bit lengths. This restriction is not essential. The termination segment must have a length greater than the longest permitted sequence of like-valued bits within a word and be such that a complete word length and its termination segments occupy less than the relevant dimension of a note across which the thread is disposed.

Security threads coded according to the present invention may be incorporated in security paper or bank notes according to known techniques. In particular a laminated strip comprises a magnetic track sandwiched between two aluminised polyester films may be disposed within the thickness of the paper in accordance with known techniques. The security devices may be made in comparatively wide widths and then slit longitudinally to provide strips of an appropriate size (of the order of a millimeter in width) for incorporation into paper which will be printed to form bank notes and subsequently cut up to provide individual bank notes each of which has a security thread running across it, usually across the shorter dimension.

## Claims

1. A security thread for bank notes or security paper comprising a magnetic track (1) which has a machine-readable binary code, the said code being constituted by termination segments (4) and word segments (5) which alternate, characterised in that each word segment consists of a plurality of substantially equal bit lengths, the first (6) and last (7) bit lengths in each word segment being of a first binary value, and each termination segment (4) being longer in length than a maximum sequence (8) of bit lengths of a second binary value within a word segment and comprising a multiplicity of bit lengths of said second binary value.

2. A security thread according to claim 1 in which the track (1) is discontinuous.

3. A security thread according to claim 2 in which a bit length of the said second binary value is constituted by an absence of magnetic material.

4. A security thread according to any foregoing claim, in which the code is repetitive, a cycle of repetition of the code consisting of a word segment and a termination segment.

5. A bank note or other security document having running across it within its thickness a security thread which has a magnetic track (1) constituting a machine-readable binary code, the said track being composed of termination segments (4) and word segments (5) which alternate, characterised in that each word segment consists of a predetermined plurality of bit lengths, the first (6) and last bit (7) lengths in each word segment being of a first binary value, each termination segment (4) being longer in length than a maximum sequence (8) of bit lengths of a second binary value within a word segment and comprising a multiplicity of bit lengths of said second binary value, and there being at least one complete word segment (5) and two complete termination segments (4) across the bank note or security document.

6. A security document according to claim 5 in which the track (1) is discontinuous.

7. A security document according to claim 6 in which a bit length of said second binary value is constituted by an absence of magnetic material.

## Patentansprüche

1. Sicherheitsfaden für Banknoten oder Sicherheitspapier, mit einer magnetischen Spur (1), die einen maschinenlesbaren binären Code hat, wobei dieser Code aus abwechselnden Endabschnitten (4) und Wortabschnitten (5) besteht, dadurch **gekennzeichnet**, daß jeder Wortabschnitt aus einer Anzahl im wesentlichen gleichlanger Bitbereiche besteht, wobei der erste (6) und letzte (7) Bitbereich in jedem Wortabschnitt einen ersten binären Wert hat und jeder Endabschnitt (4) länger als eine maximale Folge (8) von Bitbereichen eines zweiten binären Wertes innerhalb eines Wortabschnittes ist und eine Mehrzahl von Bitbereichen dieses zweiten binären Wertes enthält.

2. Ein Sicherheitsfaden nach Anspruch 1,
bei dem die Spur (1) diskontinuierlich ist.

3. Ein Sicherheitsfaden nach Anspruch 2,
bei dem ein Bitbereich mit dem zweiten binären Wert durch das Fehlen von magnetischem Material gebildet ist.

4. Ein Sicherheitsfaden nach einem der vorhergehenden Ansprüche,
bei dem sich der Code wiederholt, wobei ein Wiederholungszyklus des Codes aus einem Wortabschnitt und einem Endabschnitt besteht.

5. Banknote oder ein sonstiges Sicherheitspapier mit einem innerhalb deren Dicke verlaufenden Sicherheitsfaden mit einer magnetischen Spur (1), die einen maschinenlesbaren binären Code bildet, wobei die Spur aus einander abwechselnden Endabschnitten (4) und Wortabschnitten (5) besteht, dadurch **gekennzeichnet**, daß jeder Wortabschnitt aus einer Anzahl im wesentlichen gleichlanger Bitbereiche besteht, wobei der erste (6) und letzte (7) Bitbereich in jedem Wortabschnitt einen ersten binären Wert hat, jeder Endabschnitt (4) länger als eine maximale Folge (8) von Bitbereichen eines zweiten binären Wertes innerhalb eines Wortabschnittes ist und eine Mehrzahl von Bitbereichen des zweiten binären Wertes umfaßt, und wobei wenigstens ein vollständiger Wortabschnitt (5) und zwei vollständige Endabschnitte (4) über die Banknote oder das Sicherheitspapier vorhanden sind.

6. Sicherheitspapier nach Anspruch 5,
bei dem die Spur (1) diskontinuierlich ist.

7. Sicherheitspapier gemäß Anspruch 6,
bei dem ein Bitbereich des zweiten binären Wertes durch Fehlen von magnetischem Material gebildet ist.

## Revendications

1. Fil de sécurité pour billets de banque ou pour papier fiduciaire comprenant une piste magnétique (1) qui possède un code binaire pouvant être lu par une machine, ledit code étant constitué de segments d'extrémité (4) et de segments de mot (5) qui sont alternés, caractérisé en ce que chaque segment de mot est constitué d'une pluralité de longueurs de bit sensiblement égales, les première (6) et dernière (7) longueurs de bit dans chaque segment de mot étant d'une première valeur binaire, et chaque segment d'extrémité (4) étant d'une longueur plus grande qu'une séquence maximale (8) de longueurs de bit d'une seconde valeur binaire à l'intérieur d'un segment de mot et comprenant une multiplicité de longueurs de bit de ladite seconde valeur binaire.

2. Fil de sécurité selon la revendication 1, dans lequel la piste (1) est discontinue.

3. Fil de sécurité selon la revendication 2, dans lequel une longueur de bit de ladite seconde valeur binaire est constituée par une absence de matière magnétique.

4. Fil de sécurité selon l'une quelconque des revendications précédentes, dans lequel le code est répétitif, un cycle de répétition du code constituant un segment de mot et un segment d'extrémité.

5. Billet de banque ou autre document fiduciaire comportant, le parcourant à l'intérieur de son épaisseur, un fil de sécurité qui possède une piste magnétique (1) constituant un code binaire pouvant être lu par une machine, ladite piste étant constitué de segments d'extrémité (4) et de segments de mot (5) qui sont alternés, caractérisé en ce que chaque segment de mot est constitué d'une pluralité prédéterminée de longueurs de bit, les première (6) et dernière (7) longueurs de bit dans chaque segment de mot étant d'une première valeur binaire, chaque segment d'extrémité (4) étant d'une longueur plus grande qu'une séquence maximale (8) de longueurs de bit d'une seconde valeur binaire à l'intérieur d'un segment de mot et comprenant une multiplicité de longueurs de bit de ladite seconde valeur binaire ; et en ce qu'il y a au moins un segment de mot (5) complet et deux segments d'extrémité (4) complets sur le billet de banque ou le document fiduciaire.

6. Document de sécurité selon la revendication 5, dans lequel la piste (1) est discontinue.

7. Document de sécurité selon la revendication 6, dans lequel une longueur de bit de ladite seconde valeur binaire est constituée par une absence de matière magnétique.
